# EUROPÄISCHE PATENTSCHRIFT

(11) **EP 0 862 503 B1**
(45) Veröffentlichungstag und Bekanntmachung des Hinweises auf die Patenterteilung: **31.03.2004**
(21) Anmeldenummer: 96934467.0
(22) Anmeldetag: 26.09.1996
(51) Int. Cl.: B05D 1/28, C08F 290/06

(54) **HAFTFÄHIGER LACKFILM**
ADHESIVE PAINT FILM
FILM DE PEINTURE ADHESIF

(30) Priorität: 27.09.1995 DE 19535934
(43) Veröffentlichungstag der Anmeldung: 09.09.1998
(73) Patentinhaber: BASF Coatings Aktiengesellschaft, 48165 Münster (DE)
(72) Erfinder: LOBERT, Martin, 49074 Osnabrück (DE); KRANIG, Wolfgang, 48308 Senden (DE); KLUGE-PALETTA, Werner, 21244 Buchholz (DE); KREITZ, Michael, 21640 Neuenkirchen (DE); ZÖLLNER, Stephan, 22043 Hamburg (DE); HARDER, Christian, 22589 Hamburg (DE); SZONN, Bodo, 24629 Kisdorf (DE)
(74) Vertreter: Fitzner, Uwe, Dr.
(86) Internationale Anmeldenummer: PCT/EP1996/004200
(87) Internationale Veröffentlichungsnummer: WO 1997/011787

(56) Entgegenhaltungen:
- EP-A- 0 050 794
- EP-A- 0 230 364
- EP-A- 0 283 651
- EP-A- 0 547 506
- DE-U- 7 241 096
- DATABASE WPI Section Ch, Week 9234 Derwent Publications Ltd., London, GB; Class A25, AN 92-279631 XP002024729 & JP 04 189 600 A (DAINIPPON PRINTING CO LTD) , 8.Juli 1992

## Beschreibung

Die Erfindung betrifft ein Verfahren zur Herstellung eines haftfähigen Lackfilms

Haftfähige Lackfilme sind bekannt. So beschreibt das deutsche Gebrauchsmuster 72 41 096 eine selbsttragende, biegsame Lackschicht in Bahn- oder Blattform, die einseitig mit einer Selbstklebemasse versehen sein kann, abgedeckt mit einem Trennpapier (S. 2, Mitte), wobei an sich bekannte Selbstklebemassen aus Kautschuk/Harz- oder Acrylat-Basis zum Einsatz kommen (S. 3, unten). Wenn auch derartige Produkte ein klassisches Lackieren mit Streichen oder Tauchen und die dabei auftretenden Probleme mit Lösungsmitteln etc. vermeiden, so haben sie für die Praxis doch erhebliche Mängel hinsichtlich ihrer Klebrigkeit, Verarbeitbarkeit und Beständigkeit, und demgemäß haben sich derartige Produkte auch nicht durchsetzen können.

Produkte dieser Art beschreibt auch die DE 30 42 156 C2, nämlich eine übertragbare Lackfolie, bei der insbesondere Acrylatharzlacke auf einem Trägerfilm aufgebracht sind, von dem diese dann auf den zu lackierenden Hintergrund übertragen werden können, wobei eine wachsartige Trennschicht ein Ablösen von dem Trägerfilm erleichtern soll, während ein selbstklebender Klebstoff zum Aufkleben des Lacks verwendet wird (Sp. 4, Z. 31 ff.). Auch diese Produkte zeigen die obengenannten Mängel.

Aus dem deutschen Gebrauchsmuster G 81 30 861 ist ein mehrschichtiges Etikett bekannt, das aus einer dünnen und einer dicken Lackschicht besteht, beide elektronenstrahl-gehärtet und lösungsmittelfrei aufgetragen, wobei die beiden Lackschichten einen guten Farbkontrast aufweisen. Mittels eines Lasers kann die obere Lackschicht durchbrannt werden, so daß die untere Lackschicht in Kontrastfarbe zur oberen sichtbar wird, als Schriftzug oder dergleichen. Aufgeklebt werden kann ein solches Etikett mittels eines Haftklebers, Heißklebers oder Reaktivklebers (S. 2, Z. 18), wobei Haftkleber bevorzugt eingesetzt werden. Zum Lackieren von Oberflächen sind derartige Produkte jedoch weniger geeignet.

Aus der EP 230.364 B1 sind Verbundstoffe zum Übertragen von Anstrichstoffen bekannt, bei denen ein mindestens teilweise wärmeaktivierbarer Klebstoff eingesetzt wird, mit spezifischem Glasumwandlungspunkt und Elastizitätsmodul. Nachteilig ist bei diesen Produkten, daß sie nicht strahlenhärtbar sind.

Auch die EP 283.651 B1 beschreibt Lackschichten und Lackfolien, bei denen der Lack in mehreren Schichten auf eine strahlungsdurchlässige Kunststoffolie aufgebracht und durch Bestrahlung durch diese Folie hindurch gehärtet wird. Diese recht aufwendig ausgestalteten Lackfolien können mit einer Haftschicht (S. 4, Z. 22/23) versehen sein, die freie chemisch reaktive Gruppen und Kunstharz oder Kunststoff enthält, insbesondere mit einem Gemisch aus Polyisocyanat und Hexamethylentetramin und einem OH-Gruppen haltigen PVC-Copolymerisat (S. 5, Z. 16-24). Nachteile solcher Produkte sind wie folgt zusammenzufassen:
- Uni-Farben erfordern einen Zweischichtenaufbau.
- Deckschichten werden mit lösemittelhaltigen Lacken erzeugt,
- Lackschichten ebenfalls.
- Die transparente Schicht wird nicht besonders durch das Verfahren gegen äußere Verschmutzung geschützt. Reinraumbedingungen sind erforderlich.

Die EP 547.506 A1 beschreibt ein Verfahren zum Aluminium-Beschichten, wobei ein Mehrschicht-Verbund auf einer Trägerfolie aufgebaut wird. Schließlich wird eine Kleberschicht aufgetragen (Sp. 4, Z. 45-53), basierend auf Epoxid, Polyester, Polyurethan, Acrylat, Harnstoff oder dergleichen, wobei auch genügend Vernetzer eingesetzt wird.

Aufgabe der Erfindung war es, ein Herstellungsverfahren für haftfähige Lackfilme zur Verfügung zustellen, das die Nachteile des Standes der Technik nicht oder zumindest nicht in dem Maße aufweist.

Demgemäß betrifft die Erfindung ein Verfahren zur Herstellung eines haftfähigen Lackfilms, bestehend aus
1. einem abziehbaren Hilfsträger,
2. einer unmittelbar mit dem Hilfsträger verbundenen, durch Elektronenstrahlung oder UV-Strahlung gehärteten Lackschicht,
3. einer unmittelbar mit der gehärteten Lackschicht verbundenen Klebschicht und
4. einer unmittelbar mit der Klebschicht verbundenen Abdeckung,
dadurch gekennzeichnet, daß man
(a) auf eine glänzende oder matte Oberfläche des Hilfsträgers einen lösemittelfreien, flüssigen, (elektronen)strahlenhärtbaren Lack in einer Strichstärke von 40 bis 100 µm aufträgt, wobei der Lack
   - 40 bis 90 Gew.-% Urethanacrylat und
   - 10 bis 50 Gew.-% Reaktivverdünner enthält,
(b) die resultierende Lackschicht mit UV-Strahlung oder Elektronenstrahlung härtet,
(c) die Oberfläche der gehärteten Lackschicht einer Coronavorbehandlung unterzieht,
(d) die vorbehandelte, gehärtete Lackschicht mit einem Kleber in einer Strichstärke von 25 bis 70 µm beschichtet, wobei der Kleber ein Acrylat-Kleber ist, der thermoplastifizierbar ist, eine ausgeprägt schwache Oberflächenklebrigkeit (controlled tack) aufweist, so daß der haftfähige Lackfilm sich nach dem Abziehen der Abdeckung leicht positionieren und korrigieren läßt, und einen Gehalt an polyfunktionellem Isocyanat von 0,5 bis 3 Gew.-% aufweist, und anschließend
(e) den Kleber unmittelbar mit einer Abdeckung versieht.

### Urethanacrylat

Die erfindungsgemäß verwendbaren Urethanacrylate sind vorzugsweise erhältlich aus 30 bis 45 Gew.-% Polyester, ganz besonders bevorzugt 30 bis 40 Gew.-%, 0,01 bis 0,1 Gew.-% Katalysatoren, 0,05 bis 0,1 Gew.-% Stabilisatoren, 10 bis 20, vorzugsweise 15 bis 20 Gew.-% Hydroxyethylacrylat, 15 bis 25, vorzugsweise 15 bis 20 Gew.-% Reaktivverdünner und 20 bis 35, vorzugsweise 25 bis 35 Gew.-% einer Diisocyanatkomponente.

Die erfindungsgemäß eingesetzten Polyester sind erhältlich aus 50 bis 75 Gew.-%, vorzugsweise 55 bis 65 Gew.-% Alkohol und 20 bis 50, vorzugsweise 30 bis 45 Gew.-% Säure sowie 5 Gew.-% üblichen Hilfsstoffen.

Die Herstellung der hydroxylgruppenhaltigen Polyesterharze erfolgt in bekannter Weise durch Veresterung von mehrwertigen Carbonsäuren mit mehrwertigen Alkoholen in Gegenwart geeigneter Katalysatoren. Anstelle der freien Säure können auch deren esterbildende Derivate eingesetzt werden. Für die Herstellung der Polyester geeignete Alkohole sind beispielsweise Ethylenglycol, Propylenglycol-1,2, Propylenglycol-1,3, Butandiol-1,2, Butandiol-1,3, Butandiol-1,4, Pentandiol-1,5, Neopentylglycol, Diethylenglycol, Triethylenglycol sowie Triole, wie z.B. Glycerin, Trimethylolethan, Trimethylolpropan und Tris-2-hydroxyethylisocyanurat.

Weiterhin sind cycloaliphatische Alkohole, wie Cyclohexanole und 1,4-Bis-(hydroxymethyl)-cyclohexan, aromatische Alkohole, wie 1,3-Xylylendiol sowie Phenole wie 2,2-Bis-(4-hydroxyphenyl)-propan (Bisphenol A) geeignet.

Bevorzugt eingesetzt werden Mischungen von Trimethylolpropan, Triethylenglycol, Cyclohexandimethanol.

Geeignet sind auch zweiwertige aliphatische Alkohole, wie Hexandiol-1,4, Hexandiol-1,6, 2-Methylpentandiol-1,5, 2-Ethylbutandiol-1,4. Dimethylolcyclohexan, dreiwertige Alkohole, wie Trimethylolbutan, vierwertige Alkohole, wie Pentaerythrit, höherwertige Alkohole, wie Di-(trimethylolpropan), Di-(pentaerythrit) und Sorbitol.

Geeignete Carbonsäuren sind beispielsweise Phthalsäure, Isophthalsäure, Terephthalsäure sowie deren veresterbare Derivate, wie z.B. die Anhydride, soweit sie existieren, und die niederen Alkylester der genannten Säuren, wie z.B. Methyl-, Ethyl-, Propyl-, Butyl-, Amyl-, Hexyl- und Octylphthalate, -terephthalate und -isophthalate. Einsetzbar sind sowohl die Halbester, die Dialkylester als auch Mischungen dieser Verbindungen. Einsetzbar sind auch die entsprechenden Säurehalogenide dieser Verbindungen. Bevorzugt werden Mischungen aus Phthalsäureanhydrid, Isophthalsäure und Adipinsäure.

Für die Herstellung des Urethanacrylats geeignet sind aliphatische und/oder cycloaliphatische Diisocyanate, wie z.B. 1,3-Cyclopentan-, 1,4-Cyclohexan-, 1,2-Cyclohexandiisocyanat, 4,4'-Methylen-bis-(cyclohexylisocyanat) und Isophorondiisocyanat, Trimethylen-, Tetramethylen-, Pentamethylen-, Hexamethylen- und Trimethylhexamethylen-1,6-diisocyanat sowie die in der EP-A-204 161, Spalte 4, Zeilen 42 bis 49 beschriebenen, von Dimerfettsäuren abgeleiteten Diisocyanate.

Bevorzugt wird Isophorondiisocyanat an den hydroxyfunktionellen Polyester addiert. Durch Addition von hydroxylgruppenhaltigen Acrylestern bzw. Methacrylestern, wie Hydroxyethylacrylat oder Hydroxybutylacrylat an isocyanatgruppenhaltige Mono- bzw. Oligomere werden die Polyurethanacrylate bzw. -methacrylate erhalten.

Damit bei der Additionsreaktion keine unerwünschte Polymerisation stattfindet, werden dem Reaktionsgemisch im allgemeinen Polymerisationsinhibitoren als Stabilisatoren zugesetzt. Zu den geeigneten Polymerisationsinhibitoren gehören bekannte Produkte, wie substituierte Phenole, wie 2,6-Di-tert.-butyl-p-kresol, Hydrochinone, wie Methylhydrochinone, und Thioether, wie Thiodiglykol oder Phenothiazin.

### Reaktivverdünner

Die strahlenhärtbaren Überzugsmittel können je nach Viskosität der Ester Reaktionsverdünner, vorzugsweise für den Einsatz in strahlenhärtbaren Überzugsmittel bekannte copolymerisierbare Verbindungen enthalten z.B. (Meth)-Acrylsäureester, insbesondere Methyl(meth)acrylat, Ethyl(meth)acrylat, Propyl(meth)acrylat, Butyl(meth)acrylat, Isopropyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Hexadecyl(meth)acrylat, Octadecyl(meth)acrylat, Octadecenyl(meth)acrylat, Phenoxyethylacrylat sowie die entsprechenden Ester der Malein-, Fumar-, Tetrahydrophthal-, Croton-, Isocroton-, Vinylessig- und Itaconsäure. Bevorzugt eingesetzt werden Monomere mit mehr als einer Doppelbindung pro Molekül, z.B. Ethylenglycoldiacrylat, Diethylenglycoldiacrylat, Propylenglycoldiacrylat, Trimethylenglycoldiacrylat, Neopentylglycoldiacrylat, 1,3-Butylenglycoldiacrylat, 1,4-Butylenglycoldiacrylat, 1,6-Hexamethylenglycoldiacrylat, 1,10-Decamethylenglycoldiacrylat, Trimethylolpropantriacrylat, Pentaerythrittetraacrylat und Pentaerythrittriacrylat sowie die entsprechenden Methacrylate. In Betracht kommen auch die ethoxilierten oder propoxilierten Derivate sowie die in der EP-A-250 631 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxybutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist. Ganz besonders bevorzugt eingesetzt werden Isobornylacrylat, Trimethylolpropantriacrylat und Acrylsäureester von ethoxyliertem Pentaerythrit.

Durch den Zusatz ethylenisch ungesättigter Verbindungen werden die Viskosität und die Aushärtegeschwindigkeit der Überzugsmassen sowie die mechanischen Eigenschaften der resultierenden Beschichtung gesteuert, wie dies dem Fachmann geläufig ist und beispielsweise in der EP-A-223 086 beschrieben ist und auf die wegen weiterer Einzelheiten verwiesen wird.

Der in den erfindungsgemäß verwendbaren Überzugsmassen üblicherweise in einer Menge von 0 bis 10 Gew.-%, bevorzugt 3 bis 6 Gew.-%, bezogen auf das Gesamtgewicht der Überzugsmassen, eingesetzte Photoinitiator variiert mit der zur Härtung der Beschichtungsmittel eingesetzten Strahlung (UV-Strahlung, Elektronenstrahlung, sichtbares Licht). Bevorzugt werden die erfindungsgemäß verwendbaren Überzugsmassen mittels Elektronenstrahlung gehärtet. In Falle des einsatzes von UV-Strahlung werden üblicherweise Photoinitiatoren auf Ketonbasis eingesetzt, beispielsweise Acetophenon, Benzophenon, Diethoxyacetophenon, 2-Hydroxy-2-methyl-1-phenylpropan-1-on, Hydroxypropylphenylketon, m-Chloroacetophenon, Propiophenon, Benzoin, Benzil, Benzildimethylketal, Anthrachinon, Thioxanthon und Thioxanthon-Derivate, Triphenylphosphin sowie Mischungen verschiedener Photoinitiatoren.

### Weitere Zusatzstoffe

Außerdem können die Überzugsmassen ggf. noch Pigmente und lackübliche Füllstoffe, übliche Hilfs- und Zusatzstoffe enthalten. Erstere werden in Mengen von 0 bis 30 Gew.-% eingesetzt. Der Anteil an lacküblichen Füllstoffen beträgt 0 bis 10 Gew.-%. Hilfs- und Zusatzstoffe werden üblicherweise in einer Menge von 0 bis 4 Gew.-%, bevorzugt 0,5 bis 2,0 Gew.-%, jeweils bezogen auf das Gesamtgewicht der Überzugsmasse, eingesetzt. Beispiele für derartige Stoffe sind Verlaufsmittel, Weichmacher, Entschäumer sowie insbesondere Haftvermittler. Als Haftvermittler werden dabei Alkoxysilane, wie beispielsweise N-β-Aminoethyl-, -Aminopropyltrimethoxysilan, -Aminopropyltrimethoxysilan, N-Methyl-β-aminopropyltrimethoxysilan oder triaminomodifiziertes Propyltrimethoxysilan (z.B. Haftvermittler DYNASLYAN^{R}, "Typ TRIAMO", Handelsprodukt der Dynamit Nobel Chemie) eingesetzt.

Als zusätzliche Haftvermittler können 0 bis 10, vorzugsweise 2 bis 5 Gew.-% eines carboxyfunktionellen (Meth)acrylsäureesters verwendet werden.

Beispiele sind β-Carboxyethylacrylat und EBECRYL® 169 oder 170 zu beziehen über UCB, S.A., Drogenbos, Belgien.

### Anwendung der Lackfilme

Die Härtung der Lackfilme wird mittels Strahlung, bevorzugt mittels Elektronenstrahlung durchgeführt. Die Anlagen und Bedingungen für diese Härtungsmethoden sind aus der Literatur bekannt (vgl. z.B. R. Holmes, U.V. and E.B. Curing Formulations für Printing Inks, Coatings and Paints, SITA Technology, Academic Press, London, United Kingdom 1984) und bedürfen keiner weiteren Beschreibung.

Die Härtung der Lackfilme erfolgt direkt nach dem Auftragen oder nach dem Verdunsten von anwesendem Wasser mittels UV- oder Elektronenstrahlen. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA-Technology, Academic Press, London, United Kingdom 1984, Seiten 79-111) und bedürfen keiner weiteren Beschreibung.

Der erfindungsgemäß erhältliche haftfähige Lackfilm eignet sich besonders zum Beschichten von planen und schwach dreidimensional geformten Oberflächen unter Einsatz einer heißen Presse. Dabei gibt es keine Verwendung von flüssigen Lacken an üblichen Lackieranlagen und damit keine kostenintensiven Maßnahmen, wie z.B. Rückgewinnung oder Verbrennung von Lösungsmitteln und keine Probleme für die Handhabung, den Transport, die Lagerung und die Entsorgung von Gefahrstoffen und für den Personenschutz. Im Vergleich mit folienbeschichteten Gegenständen wird eine Erhöhung des anwenderischen und des ideellen Wertes derselben durch Verbesserung der Temperatur- und Chemikalienbeständigkeit und der Erzeugung einer Oberfläche mit einem lacktypischen Aussehen und Griff erreicht. Es ergibt sich zudem eine weitgehende Vermeidung der Belastung der Raumluft mit retendierten Lösungsmitteln und Monomeren bei Anwendung der mit haftfähigem Lackfilm beschichteten Gegenstände durch die Verwendung strahlenhärtbarer Lacke, insbesondere elektronenstrahlhärtbarer Lacke.

Der erfindungsgemäß erhältliche Lackfilm eignet sich besonders für die Beschichtung von Werkstücken aus z.B. MDF (Mittel-Dichte-Faserplatte) und erfüllt in der Chemikalien beständigkeit nach DIN 68861 Teil 1 die Bedingungen der Beanspruchungsgruppe 1A gegen Aceton, mindestens jedoch die der Beanspruchungsgruppe 1B. In der Gitterschnitt-Prüfung nach DIN 53151 wird mindestens der Kennwert Gt 2C erreicht, und die Flexibilität reicht aus, um, ohne zu brechen, um eine gerundete Kante heißgepreßt werden zu können.

### Kleber

Die Verbindung der auf dem freitragenden Lackfilm liegenden Haftschicht (Kleber) zum freitragenden Lackfilm einerseits und zur Oberfläche des Werkstückes andererseits ist nach der Heißverpressung des haftfähigen Lackfilmes so fest, daß beim ruckartigen Abziehen eines mit Andruck aufgeklebten und 72 Stunden darauf belassenen Selbstklebebandes kein Adhäsionsbruch stattfindet.

Der verwendete Acrylat-Kleber ist insbesondere ein nach innen vernetzbares und nach außen durch Beimischung eines polyfunktionellen Isocyanates reaktiv eingestelltes Copolymerisat aus weichmachenden und hartmachenden Acrylatmonomeren mit einer ausgeprägt schwachen Oberflächenklebrigkeit (controlled tack).

Der Kleber kann auf den ausgehärteten Lackfilm aufgetragen werden durch Verstreichen aus Lösung an einer Beschichtungsanlage mit einem Beschichtungsrakel und Verdampfen der Lösungsmittel in einem Trocknungskanal.

Eine gute Haftung des Klebers zum Lack wird erreicht durch Abmischung des Klebers mit 0,5 bis 3, insbesondere 1 - 2 Gew.-% eines Isocyanates mit einem Isocyanatgehalt von 20 bis 24 Gew.-% und partielle Reaktion des Isocyanates mit freien funktionellen Gruppen des Lackes während der Trocknung des Klebers auf der Lackoberfläche und während der Lagerung des fertigen Produktes. Als freie funktionelle Gruppen des Lackes haben sich OH-Gruppen, vorzugsweise COOH-Gruppen, als am wirksamsten erwiesen. Es hat sich zur Verbesserung der Verankerung des AcrylatCopolymerisates auf dem Lack weiterhin als vorteilhaft gezeigt, wenn dieses in einem Lösungsmittel gelöst wird, welches die Lackoberfläche während der Beschichtung anquillt. Als Lösungsmittel in diesem Sinne eignen sich insbesondere Ketone.

Die Haftung des Klebers auf der Lackoberfläche wird durch eine Coronavorbehandlung derselben verbessert.

Eine ausreichende Haftung des mit einem Kleber ausgerüsteten Lackfilmes zum Substrat (Werkstückoberfläche) kann erreicht werden durch Heißverpressung auf dem Werkstück bei einer Temperatur von 120 bis 160 °C, vorzugsweise 135 bis 150 °C, bei einem Druck von 10 bis 50 bar, vorzugsweise 20 bis 40 bar und über eine Zeitspanne von 1 bis 4 Minuten, vorzugsweise 2 bis 3 Minuten.

Die Vernetzung des Klebers kann erfolgen durch Salzbildung aus dem zentralen Metallatom eines Chelatkomplexes mit den freien Carboxylgruppen der copolymerisierten Acrylsäure bei Temperaturen ab 100°C. Der Anteil an Acrylsäure liegt zwischen 2,5 und 8, insbesondere zwischen 2,5 und 5 und vor allem bei 5 Gew.-%. Als Vernetzungsmittel kann ein mit Titan oder Aluminium gebildeter

Innerkomplex auf Basis Acetylaceton Verwendung finden. Davon werden insbesondere 0,1 bis 0,6, vorzugsweise 0,1 bis 0,4 Gew.-% eingesetzt.

Eine weitere Vernetzung kann erfolgen durch partielle Reaktion des gegebenenfalls in den Kleber eingemischten Isocyanates mit seinen sauren Gruppen.

Die Vernetzung des Klebers soll so hoch sein, daß dieser unter geringen Spannungen, die sich durch die Verpressung im Lackfilm aufbauen können, nicht geschert wird.

Die verringerte Oberflächenklebrigkeit (controlled tack) des AcrylatCopolymerisates kann erhalten werden durch Copolymerisation mit etwa 15 bis 50, insbesondere 20 bis 40, Gew.-% tertiärem Butylacrylat und/oder 5 bis 30, insbesondere 10 bis 15, Gew.-% Methylmethacrylat, je nach gewünschter Ausprägungsstufe des controlled tacks.

### Herstellung:

(a) Beschichtung eines Hilfsträgers, vorzugsweise Polyesterfolie in einer Stärke von 35 bis 100µm, vorzugsweise 50µm, mit einem lösemittelfreien, flüssigen (elektronen-)strahlenhärtbaren Lack in einer Strichstärke von 40 bis 100µm, vorzugsweise 70 bis 80 µm.
(b) Härtung der resultierenden Lackschicht mit UV-Strahlung oder Elektronenstrahlung, insbesondere an einer ESH-Anlage vom Scannertyp bei 50 bis 100kGy, vorzugsweise 80kGy. Die Beschleunigerspannung liegt bei etwa 350kV.
   Der Hilfsträger weist eine glänzende oder matte Oberfläche auf. Dementsprechend wird die spätere Sichtseite des Lackfilms entweder glänzend oder matt ausfallen. Der Hilfsträger kann leicht von der Lackoberfläche abgezogen werden, sollte aber auf dieser insbesondere bis nach der Verpressung des haftfähigen Lackfilmes verbleiben.
(c) Unterziehung der Oberfläche der gehärteten Lackschicht einer Coronavorbehandlung.
(d) Beschichtung der freien Lackoberfläche mit einem Kleber in einer Strichstärke von 25 bis 70µm, vorzugsweise 30 bis 40 µm.
(e) Versehen des Klebers unmittelbar mit einer Abdeckung, insbesondere mit einem antiadhäsiv ausgerüsteten Papier oder einer entsprechenden Folie.

Im folgenden wird die Erfindung unter Bezugnahme auf die Beispiele näher beschrieben:

### A. Herstellung des Lacks

### Beispiel 1

39,8 Teile des erfindungsgemäß verwendbaren Urethanacrylats, 80%ig in Phenoxyethylacrylat, 9,9 Teile acryliertes Polyol, 14,9 Teile Isobornylacrylat, 9,9 Teile ethoxylliertes Penthaerythrit-Tetracrylat, 24,9 Teile TiO₂-Pigment, 0,3 Teile Emulgator, 0,3 Teile Dispergierhilfsmittel.

Die Komponenten werden in lacktechnisch üblichen Behältern eingewogen und mittels einer Dissolver vermengt.

### Beispiel 2

61,5 Teile des erfindungsgemäß verwendbaren Urethanacrylats werden in einem Kessel vorgelegt und bei 50°C mit 13,4 Teilen Polyetheracrylat gemischt. Bei 50°C werden 7,2 Teile Vinylcaprolactam und 10 Teile Isobornylacrylat in der angegebenen Reihenfolge eingerührt.

Die folgenden Verfahrensschritte werden unter Ausschluß direkten Sonnenlichteinfalls durchgeführt. Bei 50°C werden 4 Teile aliphatisches Urethanacrylat eingerührt. Anschließend wird mit 3,4 Teilen Isobomylacrylat versetzt.

Anschließend wird auf eine Viskosität von 6.900 +/- 1.500 mPaS (23°C) eingestellt. Die Harzlösung wird noch eine Stunde bei 50°C intensiv gerührt, warm über 1 µm Filter filtiert und abgefüllt.

### Beispiel 3

64,9 Teile des erfindungsgemäß verwendbaren Urethanacrylats werden in einem Kessel vorgelegt. Bei 50°C werden 6 Teile Vinylcaprolactam, 3,8 Teile Tripropylenglycoldiacrylat und 16 Teile Hexandioldiacrylat in der angegebenen Reihenfolge eingerührt. Die folgenden Verfahrensschritte werden unter Ausschluß direkten Sonnenlichteinfalls durchgeführt:

Bei 50°C werden aliphatische Urethanacrylate eingerührt (4 Teile) und mit 4,8 Teilen Hexandioldiacrylat auf eine Viskosität von 6.500 +/- 1.500 mPaS eingestellt.

Die Harzlösung wird noch eine Stunde bei 50°C intensiv gerührt und über einen 1 µm Filter filtriert und abgefüllt.

### Beispiel 4

55 Teile des erfindungsgemäß verwendbaren Urethanacrylats werden in einem Kessel vorgelegt und bei 50°C mit einem aliphatischen Urethanacrylat (8 Teile) gemischt. Bei 50°C werden 5,5 Teile Tripropylenglycoldiacrylat, 7 Teile Vinylcaprolactam, 16 Teile Isobornylacrylat in der angegebenen Reihenfolge eingerührt.

Unter Ausschluß von direktem Sonnenlichteinfall werden bei 50°C 4 Teile aromatisches Urethanacrylat eingerührt und mit 4 Teilen Isobornylacrylat auf eine Viskosität von 7.500 +/- 1.500 mPaS eingestellt. Die Harzlösung wird noch bei 50°C eine Stunde gerührt, warm über einen 1 µm Filter abfiltriert und abgefüllt.

### Beispiel 5

54,3 Teile des erfindungsgemäß verwendbaren Urethanacrylats werden in einem Kessel vorgelegt und bei 50°C mit 7,9 Teilen aliphatischem Urethanacrylat gemischt. Bei 50°C werden 5,3 Teile Tripropylenglycoldiacrylat, 7 Teile Vinylcaprolactam und 17 Teile Isobornylacrylat in der angegebenen Reihenfolge eingerührt. Unter Ausschluß von Sonnenlicht wird bei 50°C ein Photoinitiator eingerührt (4 Teile) und mit 4 Teilen Isobornylacrylat auf eine Viskosität von 7.500 +/-1.500 mPaS eingestellt.

Die Harzlösung wird noch eine Stunde bei 50°C intensiv gerührt, warm über einen 1 µm Filter abfiltriert und abgefüllt.

### B. Herstellung des Lackfilms

1. Eine matte Polyethylenterephthalatfolie mit einem bei einem Einstrahlungswinkel von 60 ° gemessenen Reflektometerwert von 35 und einer Stärke von 50 µm wird an einer Beschichtungsanlage mittels eines Rakels mit einem lösungsmittelfreien, elektronenstrahlhärtbaren Lack gemäß den Beispielen 1-5 in einer Strichstärke von 80 µm beschichtet.
2. Die mit dem flüssigen, lösungsmittelfreien Lack beschichtete Polyethylenterephthalatfolie wird einer Elektronenstrahlanlage vom Scannertyp zugeführt, wo der Lack ungekühlt unter Inertgas mit 80kGy bei einer Beschleunigerspannung von 350kV gehärtet wird.
3. Die freie Lackoberfläche des erhaltenen, leicht lösbaren Lack/Folien Verbundes wird entweder inline sofort oder separat mittels eines Rakels mit einem Kleber in einer Strickstärke von 30 µm beschichtet. Vor dem Auftragen des Klebers wird die Lackoberfläche einer Coronavorbehandlung unterzogen.
4. Der Kleber stellt ein Acrylat-Copolymerisat aus n-Butylacrylat mit 5 Gew.-% Acrylsäure dar. Um die störende Oberflächenklebrigkeit zu verhindern, werden die Monomere copolymerisiert mit 20 Gew.-% tert.-Butylacrylat und 15 Gew.-% Methylmethacrylat. Zur inneren Vernetzung des Klebers wird dem Copolymerisat eine Menge von 0,4 Gew.-% Aluminiumacetylacetonat zugesetzt und zur Erhöhung der Reaktivität gegenüber der Lackoberfläche wird der Abmischung 1 % eines polyfunktionellen, durch Trimerisierung von Hexamethylendiisocyanat hergestellten Polyisocyanates mit einem Isocyanatgehalt von 21 Gew.-% beigefügt. Der Kleber wird als 20 Gew.-%ige Lösung eingesetzt und enthält als Lösungsmittel Aceton und Isopropanol im Verhältnis 3:1.
5. Der mit einem Kleber beschichtete Lack durchläuft anschließend einen Trocknungskanal, in dem über eine Zeitspanne von 1 bis 4 Minuten bei einer Temperatur von 70 bis 100 °C die Verdampfung der Lösungsmittel stattfindet.
6. Der getrocknete, lediglich anvernetzte und noch weitgehend isocyanatreaktive Kleber wird mit einem silikonisierten Papier oder mit einer silikonisierten Polyethylenfolie abgedeckt.
7. Das erhaltende Verbundprodukt wird zur Rolle gewickelt und kann gelagert werden. Während der Lagerung findet die haftungsverbessernde Reaktion des im Kleber vorhandenen freien Isocyanates mit den funktionellen Gruppen des Lackes statt.

### C. Beschichtungsbeispiel

Ein so hergestellter haftfähiger Lackfilm kann, wie folgt, dauerhaft mit der Oberfläche einer mitteldichten Faserplatte verbunden werden:
1. Der haftfähige Lackfilm wird auf die Größe des zu beschichtenden Werkstückes zugeschnitten.
2. Das Abdeckpapier oder die Abdeckfolie werden entfernt.
3. Der haftfähige Lackfilm wird mit der Kleberseite auf die zu beschichtende Seite des Werkstückes aus mitteldichter Faserplatte gelegt. Da der Kleber einen controlled tack aufweist, läßt sich der haftfähige Lackfilm leicht positionieren und korrigieren. Die Polyesterfolie wird nicht von der Sichtseite des Lackes entfernt.
4. Jetzt wird der haftfähige Lackfilm mittels einer Flachpresse 3 Minuten bei 40 bar und 150 °C auf die mitteldichte Faserplatte gepreßt.
   Das anvernetzte, aber noch fließfähige und unter der Druckanwendung die Oberfläche des Werkstückes benetzende Acrylat-Copolymerisat erfährt im Laufe der Verpressung bei der genannten Temperatur seine eigentliche Vernetzung und somit die für den späteren Gebrauch des Werkstückes erforderliche Kohäsion.
5. Nach der Verpressung und dem Abkühlen des Werkstückes kann die matte Polyesterfolie von der Sichtseite des Lackes abgezogen werden. Es empfiehlt sich allerdings, die Polyesterfolie auch während der weiteren Handhabungen des beschichteten Werkstückes noch nicht von der Lackoberfläche zu entfernen, da sie diese bis zur Endanwendung in idealer Weise schützen kann.
6. Man erhält ein lackiertes Werkstück mit fehlerfreier, matter Oberfläche, welche die genannten Anforderungen erfüllt.

## Patentansprüche

1. Verfahren zur Herstellung eines haftfahigen Lackfilms, bestehend aus
1. einem abziehbaren Hilfsträger,
2. einer unmittelbar mit dem Hilfsträger verbundenen, durch Elektronenstrahlung oder UV-Strahlung gehärteten Lackschicht,
3. einer unmittelbar mit der gehärteten Lackschicht verbundenen Klebschicht und
4. einer unmittelbar mit der Klebschicht verbundenen Abdeckung,
**dadurch gekennzeichnet, daß** man
(a) auf eine glänzende oder matte Oberfläche des Hilfsträgers einen Lösemittelfreien, flüssigen, (elektronen)strahlenhärtbaren Lack in einer Strichstärke von 40 - 100 µm aufträgt, wobei der Lack
- 40 - 90 Gew.-% Urethanacrylat und
- 10 - 50 Gew.-% Reaktivverdünner enthält,
(b) die resultierende Lackschicht mit UV-Strahlung oder Elektronenstrahlung härtet,
(c) die Oberfläche der gehärteten Lackschicht einer Coronavorbehandlung unterzieht,
(d) die vorbehandelte, gehärtete Lackschicht mit einem Kleber in einer Strichstärke von 25 - 70 µm beschichtet, wobei der Kleber ein Acrylat-Kleber ist, der thermoplastifizierbar ist, eine ausgeprägt schwache Oberflächenklebrigkeit (controlled tack) aufweist, so dass der haftfähige Lackfilm sich nach dem Abziehen der Abdeckung leicht positionieren und korrigieren läßt, und einen Gehalt an polyfunktionellem Isocyanat von 0,5 bis 3 Gew.-% aufweist, und anschließend
(e) den Kleber unmittelbar mit einer Abdeckung versteht.

2. Verfahren nach Anspruch 1, **dadurch gekennzeichnet, daß** mit UV-Strahlen gehärtet wird und der Lack bis zu 10 Gew.-% Photoinitiator enthält.

3. Verfahren nach Anspruch 1 oder 2
**dadurch gekennzeichnet, daß** als Reaktivverdünner Vinylcaprolactam, Tripropylenglycoldiacrylat, Hexandioldiacrylat, isobornylacrylat, Trimethylolpropantriacrylat, Pentaerythrittetraacrylat, und Acrylsäureester von ethoxyliertem Pentaerythrit verwendet werden.

4. Verfahren nach einem der Ansprüche 1 bis 3
**dadurch gekennzeichnet, daß** der Acrylat-Kleber 3 - 8 Gew.-%, copolymerisierter Acrylsäure enthält.

5. Verfahren nach einem der Ansprüche 1 bis 4
**dadurch gekennzeichnet, daß** der Acrylat-Kleber 15 bis 50 Gew.-% copolymerisiertes tert.-Butylacrylat und/oder 5 bis 30 Gew.-% copolymerisiertes Methylmethacrylat enthält.

6. Verfahren nach einem der Ansprüche 1 bis 5
**dadurch gekennzeichnet, daß** der Acrylat-Kleber 0,1 - 0,6 Gew.-% eines Metall-Chelat-Komplexes enthält.

7. Verfahren nach einem der Ansprüche 1 bis 6
**dadurch gekennzeichnet, daß** der Acrylat-Kleber eingemischtes polyfunktionelle Polyisocyanats mit einem Isocyanat-Gehalt von 20 - 24 Gew.-% enthält.

## Claims

1. Process for producing an adhesive coating film consisting of
1. a removable auxiliary backing,
2. a coating layer joined directly to the auxiliary backing and cured by electron beams or UV radiation,
3. an adhesive layer joined directly to the cured coating layer, and
4. a liner joined directly to the adhesive layer,
**characterized in that**
(a) a solvent-free, liquid, (electron-beam-) radiation-curable coating material is applied in a coat thickness of 40 - 100 µm to a glossy or matt surface of the auxiliary backing, the coating material containing
- 40 - 90% by weight of urethane acrylate and
- 10 - 50% by weight of reactive diluent,
(b) the resultant coating layer is cured with UV radiation or electron beams,
(c) the surface of the cured coating layer is subjected to corona pretreatment,
(d) the pretreated, cured coating layer is coated with an adhesive at a coat thickness of 25 - 70 µm, the adhesive being an acrylate adhesive which can be plastified thermally, has a decidedly weak surface tack (controlled tack), so that the adhesive coating film can easily be positioned and corrected after the liner has been removed, and has a polyfunctional isocyanate content of 0.5 - 3% by weight, and subsequently
(e) the adhesive is provided directly with a liner.

2. Process according to Claim 1, **characterized in that** curing is carried out with UV radiation and the coating material contains up to 10% by weight of photoinitiator.

3. Process according to Claim 1 or 2, **characterized in that** reactive diluents used are vinylcaprolactam, tripropylene glycol diacrylate, hexanediol diacrylate, isobornyl acrylate, trimethylolpropane triacrylate, pentaerythritol tetraacrylate, and acrylic esters of ethoxylated pentaerythritol.

4. Process according to any one of Claims 1 to 3, **characterized in that** the acrylate adhesive contains 3 - 8% by weight of copolymerized acrylic acid.

5. Process according to any one of Claims 1 to 4, **characterized in that** the acrylate adhesive contains from 15 to 50% by weight of copolymerized tert-butyl acrylate and/or from 5 to 30% by weight of copolymerized methyl methacrylate.

6. Process according to any one of Claims 1 to 5, **characterized in that** the acrylate adhesive contains 0.1 - 0.6% by weight of a metal chelate complex.

7. Process according to any one of Claims 1 to 6, **characterized in that** the acrylate adhesive comprises polyfunctional polyisocyanate incorporated by mixing and having an isocyanate content of 20 - 24% by weight.

## Revendications

1. Procédé pour la fabrication d'un feuil de peinture adhésif, consistant en
1. un support auxiliaire pouvant être enlevé,
2. une couche de peinture directement liée au support auxiliaire, durcie par irradiation ou par faisceau d'électrons,
3. une couche adhésive liée directement à la couche de peinture durcie et
4. une couverture liée directement à la couche adhésive,
**caractérisé en ce que**
(a) on applique sur une surface mate ou brillante du support auxiliaire une peinture liquide sans solvant, durcissable par irradiation (par faisceau d'électrons), en une épaisseur de couche de 40 à 100 µm, la peinture contenant
- de 40 à 90 % en poids d'uréthanne-acrylate et
- de 10 à 50 % en poids de diluant réactif,
(b) la couche de peinture résultante est durcie par irradiation UV ou par faisceau d'électrons,
(c) on soumet la surface de la couche de peinture durcie à un traitement par effet couronne,
(d) on revêt la couche de peinture durcie, prétraitée, d'un adhésif en une épaisseur de couche de 25 à 70 µm, l'adhésif étant un adhésif acrylate qui est thermoplastifiable, présente un remarquablement faible état collant superficiel (*controlled tack*), de sorte que le feuil de peinture adhésif peut être aisément corrigé et positionné après l'enlèvement de la couverture, et a une teneur en isocyanate polyfonctionnel de 0,5 à 3 % en poids, et ensuite
(e) on munit immédiatement l'adhésif d'une couverture.

2. Procédé selon la revendication 1, **caractérisé en ce que** la peinture est durcie au moyen de rayons UV et contient jusqu'à 10 % en poids de photo-amorceur.

3. Procédé selon la revendication 1 ou 2, **caractérisé en ce qu'**on utilise en tant que diluant réactif du vinylcaprolactame, du diacrylate de tripropylèneglycol, du diacrylate d'hexanediol, de l'acrylate d'isobornyle, du triacrylate de triméthylolpropane, du tétra-acrylate de pentaérythritol et des esters d'acide acrylique et de pentaérythritol éthoxylé.

4. Procédé selon l'une quelconque des revendications 1 à 3, **caractérisé en ce que** l'adhésif acrylate contient de 3 à 8 % en poids d'acide acrylique copolymérisé.

5. Procédé selon l'une quelconque des revendications 1 à 4, **caractérisé en ce que** l'adhésif acrylate contient de 15 à 50 % en poids d'acrylate de tert-butyle copolymérisé et/ou de 5 à 30 % en poids de méthacrylate de méthyle copolymérisé.

6. Procédé selon l'une quelconque des revendications 1 à 5, **caractérisé en ce que** l'adhésif acrylate contient de 0,1 à 0,6 % en poids d'un complexe de chélate-métal.

7. Procédé selon l'une quelconque des revendications 1 à 6, **caractérisé en ce que** l'adhésif acrylate contient un polyisocyanate polyfonctionnel incorporé ayant une teneur en isocyanate de 20-24 % en poids.
